# EUROPEAN PATENT APPLICATION

(11) **EP 4 775 802 A1**
(43) Date of publication of application: **15.07.2026**
(21) Application number: 26151408.7
(22) Date of filing: 12.01.2026
(51) Int. Cl.: F01D 15/10, F01D 25/12, H02K 9/00

(54) **ELECTRIC MACHINE COOLING FOR AIRCRAFT PROPULSION SYSTEM**

(30) Priority: 10.01.2025 US 202519016695
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An apparatus is provided for an aircraft. This apparatus includes an electric machine (100A; 100B) and an air cooling circuit (134). The electric machine (100A; 100B) includes an electric machine rotor and an electric machine stator. The electric machine (100A; 100B) is configured to generate an electromagnetic field with the electric machine rotor and the electric machine stator. The electric machine rotor is configured to rotate about an axis (109A; 109B). The air cooling circuit (134) includes a cooling boot (142A; 142B). The air cooling circuit (134) is configured to direct air from an air source into the cooling boot (142A; 142B). The cooling boot (142A; 142B) forms an air plenum (166) with an exterior surface (174) of the electric machine (100A; 100B). The cooling boot (142A: 142B) includes a plurality of air outlets (178). The cooling boot (142A; 142B) is configured to direct the air through the air outlets (178) and into the air plenum (166) to air cool the electric machine (10A; 100B).

## Description

### BACKGROUND OF THE DISCLOSURE

### 1. Technical Field

This disclosure relates generally to an aircraft powerplant and, more particularly, to cooling electronics of the aircraft powerplant.

### 2. Background Information

An aircraft powerplant includes various electronics which may utilize heat dissipation during aircraft powerplant operation. Various heat dissipation systems and methods are known in the art. While these known heat dissipation systems and methods have various benefits, there is still room in the art for improvement.

### SUMMARY OF THE DISCLOSURE

According to an aspect of the present disclosure, an apparatus is provided for an aircraft. This apparatus includes an electric machine and an air cooling circuit. The electric machine includes an electric machine rotor and an electric machine stator. The electric machine is configured to generate an electromagnetic field with the electric machine rotor and the electric machine stator. The electric machine rotor is configured to rotate about an axis. The air cooling circuit includes a cooling boot. The air cooling circuit is configured to direct air from an air source into the cooling boot. The cooling boot forms an air plenum with an exterior surface of the electric machine. The cooling boot includes a plurality of air outlets. The cooling boot is configured to direct the air through the air outlets and into the air plenum to air cool the electric machine.

According to another aspect of the present disclosure, another apparatus is provided for an aircraft. This apparatus includes a turbine engine, an electric machine and an air cooling circuit. The turbine engine includes a combustor section, a combustor section, a turbine section, a flowpath and a rotating structure. The flowpath extends through the compressor section, the combustor section and the turbine section from an inlet into the flowpath to an exhaust from the flowpath. The rotating structure includes a bladed rotor in the compressor section or the turbine section. The electric machine includes an electric machine rotor. The electric machine is configurable as an electric motor and/or an electric generator. The electric machine rotor is operatively coupled to the rotating structure. The air cooling circuit is configured to direct a plurality of jets of cooling air against an exterior surface of the electric machine to impingement cool the electric machine.

According to still another aspect of the present disclosure, another apparatus is provided for an aircraft. This apparatus includes an open propulsor rotor, a turbine engine, an electric machine and an air cooling circuit. The turbine engine is configured to drive rotation of the open propulsor rotor. The electric machine is operatively coupled to the turbine engine. The electric machine is configurable as an electric motor and/or an electric generator. The air cooling circuit is configured to impingement cool the electric machine using air received from an air circuit inlet into the air cooling circuit. The air circuit inlet is disposed along an exterior surface bordering an environment external to the aircraft.

The apparatus may also include a working fluid circuit configured to lubricate and/or further cool the electric machine with a liquid working fluid.

The cooling boot may be configured such that the air directed into the air plenum impingement cools the exterior surface of the electric machine.

A first of the air outlets may be configured to direct a jet of the air across the air plenum to impinge against the exterior surface of the electric machine.

The cooling boot may be configured such that the air directed into the air plenum convectively cools the exterior surface of the electric machine.

At least a portion of the air plenum may be radially outboard of and may extend circumferentially about the electric machine. A first of the air outlets may project radially inwards to the air plenum.

At least a portion of the air plenum may be axially next to the electric machine. A first of the air outlets may project axially to the air plenum.

The cooling boot may also include a manifold with a wall and an air cavity. The wall may be between and may extend along the air cavity and the air plenum. Each of the plurality of air outlets may extend through the wall from the air cavity to the air plenum.

A centerline of a first of the air outlets may be angularly offset from the exterior surface of the electric machine by an offset angle between seventy degrees and ninety degrees.

The air cooling circuit may also include a flow regulator arranged inline between the air source and the cooling boot.

The air cooling circuit may also include a compressor arranged inline between the air source and the cooling boot.

The air source may be a flowpath within a propulsion system for the aircraft. The air cooling circuit may be configured to bleed the air from the flowpath.

The air source may be an environment external to the aircraft. The air cooling circuit may also include an air circuit inlet that fluidly couples the air cooling circuit to the environment.

The apparatus may also include a working fluid circuit configured to service the electric machine using a liquid working fluid.

The working fluid circuit may extend through the electric machine.

The apparatus may also include a working fluid circuit configured to lubricant and/or further cool the electric machine using a liquid working fluid.

The electric machine may be configurable as an electric motor.

The electric machine may be configurable as an electric generator.

The apparatus may also include a turbine engine including a flowpath, a compressor section, a combustor section and a turbine section. The flowpath may extend through the compressor section, the combustor section and the turbine section. The electric machine may be operatively coupled to the turbine engine.

The apparatus may also include an aircraft propulsion system comprising an open propulsor rotor. The aircraft propulsion system may be configured with the electric machine and the air cooling circuit.

The apparatus may also include an aircraft propulsion system comprising a ducted propulsor rotor. The aircraft propulsion system may be configured with the electric machine and the air cooling circuit.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system at an electric machine system.
FIG. 3 is a schematic illustration of a portion of the aircraft propulsion system at a working fluid system with multiple fluid circuits.
FIG. 4 is a schematic cross-sectional illustration of a portion of the working fluid system at a cooling boot.
FIG. 5 is a schematic sectional illustration of a portion of the working fluid system taken along line 5-5 in FIG. 4.
FIG. 6 is a schematic sectional illustration of a portion of the working fluid system with another cooling boot arrangement.
FIGS. 7 and 8 are schematic illustrations of a portion of the aircraft propulsion system with various air circuit inlet arrangements.
FIG. 9 is a schematic illustration of electric machines and their cooling boots arranged within an internal compartment of the aircraft propulsion system.
FIG. 10 is a schematic illustration of an air cooling circuit with an electric compressor.
FIG. 11 is a partial side schematic illustration of the aircraft propulsion system with an open propulsor rotor.
FIG. 12 is a schematic illustration of electric machines and their cooling boots arranged within an aircraft structure.

### DETAILED DESCRIPTION

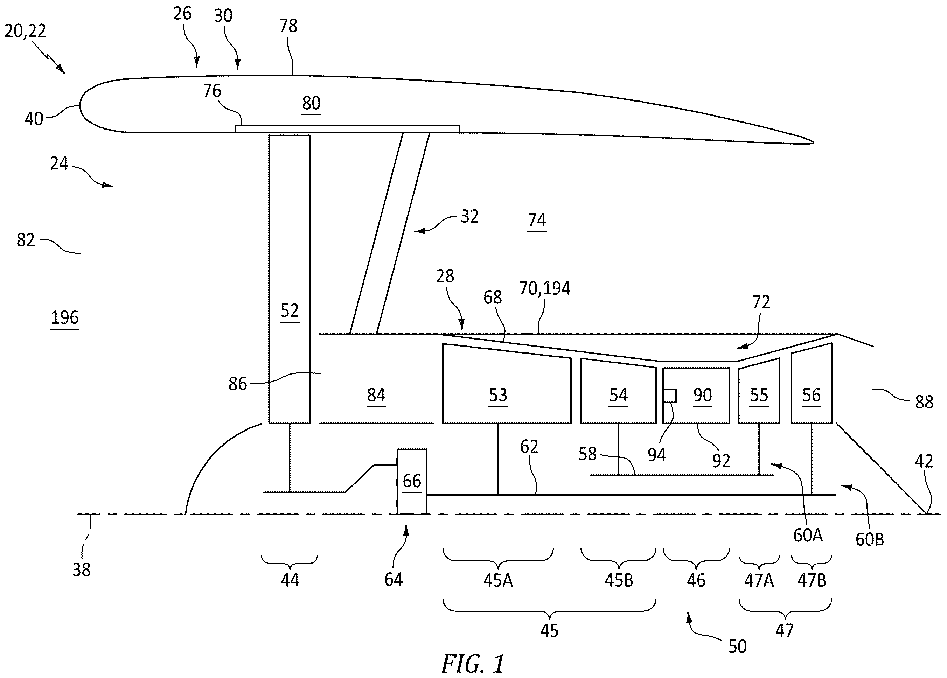

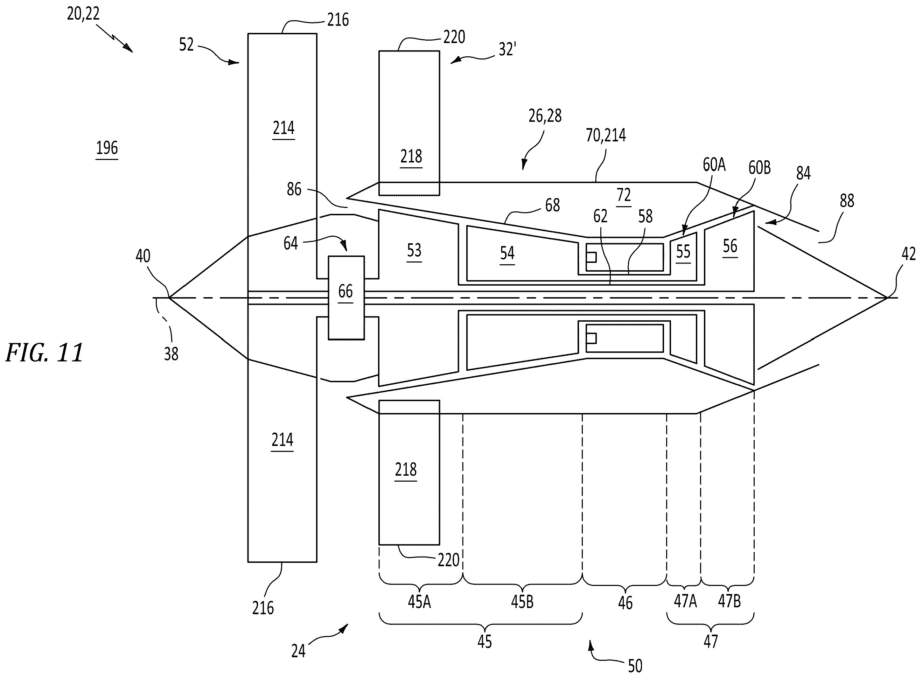

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted or open rotor propulsion system (see e.g., FIG. 11). Moreover, the aircraft powerplant 20 is not limited to propulsion system applications. The aircraft powerplant 20, for example, may alternatively (or also) be configured as an electrical power system for the aircraft; e.g., an auxiliary power unit (APU).

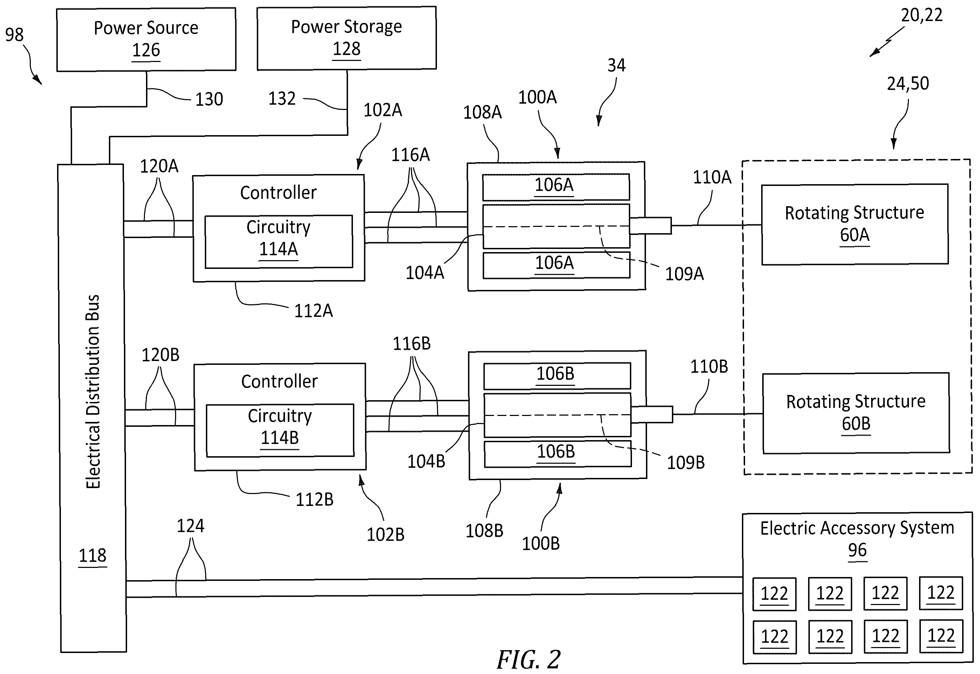

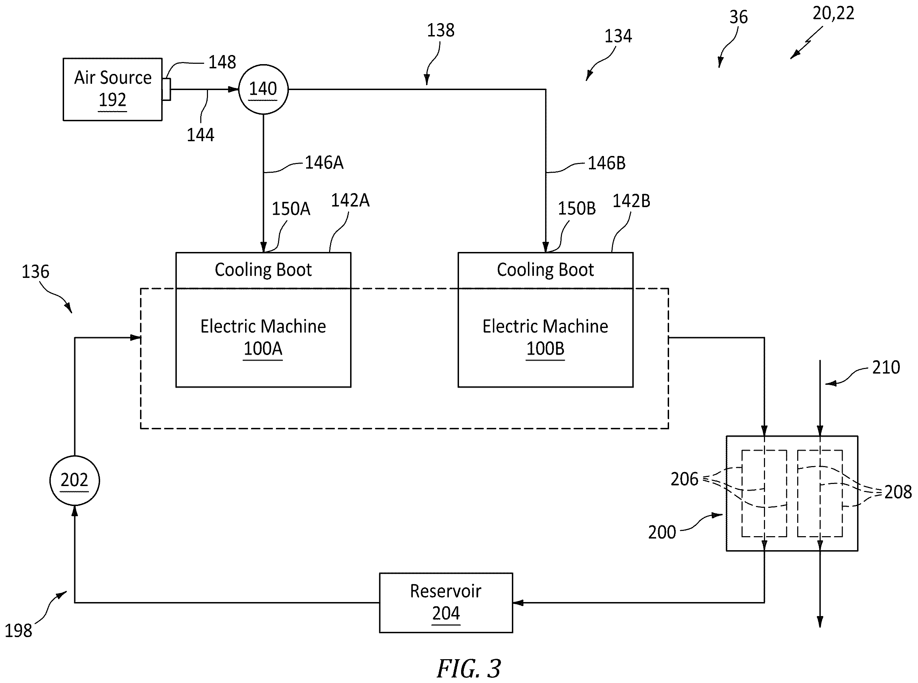

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and a working fluid system 36 (see FIG. 3). The aircraft propulsion system 22 extends axially along an axis 38 between an axial forward, upstream end 40 of the aircraft propulsion system 22 and an axial aft, downstream end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. Here, at least (or only) the LPC section 45A, the HPC section 45B, the combustor section 46, the HPT section 47A and the LPT section 47B collectively form a core 50 of the turbine engine 24.

The engine sections 44-47B may be arranged sequentially along the propulsion system axis 38 within the propulsion system housing 26. The propulsor section 44 includes a bladed propulsor rotor 52; e.g., a fan rotor. The LPC section 45A includes a bladed low pressure compressor (LPC) rotor 53. The HPC section 45B includes a bladed high pressure compressor (HPC) rotor 54. The HPT section 47A includes a bladed high pressure turbine (HPT) rotor 55. The LPT section 47B includes a bladed low pressure turbine (LPT) rotor 56.

The HPC rotor 54 is coupled to and rotatable with the HPT rotor 55. The HPC rotor 54 of FIG. 1, for example, is connected to the HPT rotor 55 through a high speed shaft 58. At least (or only) the HPC rotor 54, the HPT rotor 55 and the high speed shaft 58 collectively form a high speed rotating structure 60A; e.g., a high speed spool of the engine core 50. This high speed rotating structure 60A of FIG. 1 and its members 54, 55 and 58 are rotatable about the propulsion system axis 38. However, it is contemplated the high speed rotating structure 60A may alternatively be rotatable about another axis radially and/or angularly offset from the rotational axis of the propulsor rotor 52 and/or the centerline axis of the turbine engine 24.

The LPC rotor 53 is coupled to and rotatable with the LPT rotor 56. The LPC rotor 53 of FIG. 1, for example, is connected to the LPT rotor 56 through a low speed shaft 62. At least (or only) the LPC rotor 53, the LPT rotor 56 and the low speed shaft 62 collectively form a low speed rotating structure 60B; e.g., a low speed spool of the engine core 50. This low speed rotating structure 60B is further coupled to the propulsor rotor 52 through a drivetrain 64. The drivetrain 64 may be configured as a geared drivetrain, where a geartrain 66 (e.g., a transmission, a speed change device, an epicyclic geartrain, etc.) is disposed between and operatively couples the propulsor rotor 52 to the low speed rotating structure 60B and its LPT rotor 56. With this arrangement, the propulsor rotor 52 may rotate at a different (e.g., slower) rotational speed than the low speed rotating structure 60B and its LPT rotor 56. Alternatively, the drivetrain 64 may be configured as a direct drive drivetrain, where the geartrain 66 is omitted. With such an arrangement, the propulsor rotor 52 rotates at a common (the same) rotational speed as the low speed rotating structure 60B and its LPT rotor 56. The low speed rotating structure 60B of FIG. 1 and its members 53, 56 and 62 as well as the propulsor rotor 52 are rotatable about the propulsion system axis 38. However, it is contemplated the low speed rotating structure 60B may alternatively be rotatable about another axis radially and/or angularly offset from the rotational axis of the propulsor rotor 52 and/or the centerline axis of the turbine engine 24.

The inner housing structure 28 of FIG. 1 includes an inner case 68 (e.g., a core case) for the turbine engine 24, an inner nacelle structure 70 (sometimes referred to as an inner fixed structure (IFS)) and an internal inner housing compartment 72 (e.g., an engine core compartment). The inner case 68 is disposed radially outboard of, extends axially along and may circumscribe one or more or all of the engine sections 45A-47B and the engine rotors 53-56. The inner case 68 may thereby house and provide a support structure for the respective engine sections 45A-47B and the engine rotors 53-56. The inner nacelle structure 70 is configured to provide an aerodynamic cover over the engine core 50 and its inner case 68. The inner housing compartment 72 of FIG. 1 is formed by and is disposed radially between the inner case 68 and an inner barrel of the inner nacelle structure 70. The inner housing structure 28 and its inner nacelle structure 70 may also form a radial inner peripheral boundary of a (e.g., annular) bypass flowpath 74 within the aircraft propulsion system 22.

The outer housing structure 30 of FIG. 1 includes an outer case 76 (e.g., a fan case) for the turbine engine 24, an outer nacelle structure 78 and an internal outer housing compartment 80. The outer case 76 is disposed radially outboard of, extends axially along and may circumscribe the propulsor section 44 and its propulsor rotor 52. The outer case 76 may thereby house and provide a containment structure for the propulsor section 44 and its propulsor rotor 52. The outer nacelle structure 78 is configured to provide an aerodynamic cover over the outer case 76. The outer housing compartment 80 of FIG. 1 is at least partially formed by and disposed radially between the outer case 76 and an outer portion (e.g., fan cowls) of the outer nacelle structure 78. The outer housing structure 30 and its outer nacelle structure 78 may also form a radial outer peripheral boundary of the bypass flowpath 74.

During operation, ambient air from outside of the aircraft enters the aircraft propulsion system 22 and its turbine engine 24 through an airflow inlet 82. This air is directed across the propulsor section 44 and into a (e.g., annular) core flowpath 84 and the bypass flowpath 74. The core flowpath 84 of FIG. 1 extends sequentially through the LPC section 45A, the HPC section 45B, the combustor section 46, the HPT section 47A and the LPT section 47B from an airflow inlet 86 into the core flowpath 84 to a combustion products exhaust 88 out from the core flowpath 84 and the engine core 50. The air entering the core flowpath 84 may be referred to as "core air". The bypass flowpath 74 extends through a bypass duct, which bypass flowpath 74 and bypass duct bypass (e.g., are disposed radially outboard of and extend along) the engine core 50 and the inner housing structure 28. The air within the bypass flowpath 74 may be referred to as "bypass air".

The core air is compressed by the LPC rotor 53 and the HPC rotor 54 and is directed into a combustion chamber 90 (e.g., annular combustion chamber) of a combustor 92 (e.g., annular combustor) in the combustor section 46. Fuel is injected into the combustion chamber 90 by one or more fuel injectors 94 and mixed with the compressed core air to provide a fuel-air mixture. This fuel-air mixture is ignited and combustion products thereof flow through and sequentially drive rotation of the HPT rotor 55 and the LPT rotor 56 about the propulsion system axis 38. The rotation of the HPT rotor 55 and the LPT rotor 56 respectively drive rotation of the HPC rotor 54 and the LPC rotor 53 about the propulsion system axis 38 and, thus, compression of the air received from the core inlet 86. The rotation of the LPT rotor 56 also drives rotation of the propulsor rotor 52 about the propulsion system axis 38 through the drivetrain 64 and its geartrain 66. The rotation of the propulsor rotor 52 propels the bypass air through and out of the bypass flowpath 74. The propulsion of the bypass air may account for a majority of thrust generated by the turbine engine 24 of FIG. 1. Briefly, within the bypass flowpath 74, the guide vane structure 32 conditions (e.g., straightens out, de-swirls, etc.) the flow of bypass air propelled by the propulsor rotor 52 to enhance the forward thrust.

While the turbine engine 24 is described above with a particular two rotating structure arrangement, the present disclosure is not limited thereto. For example, the LPC rotor 53 may be omitted to configure the LPT rotor 56 as a power turbine (PT) rotor for the propulsor rotor 52. In another example, the turbine engine 24 may also include another rotating structure; e.g., an intermediate speed spool for the engine core 50.

Referring to FIG. 2, the electric machine system 34 is electrically coupled to an optional electric accessory system 96 and an electrical system 98 for the aircraft and its aircraft propulsion system 22. The electric machine system 34 of FIG. 2 includes one or more electric machines 100A and 100B (generally referred to as "100") and one or more electric machine (EM) controllers 102A and 102B (generally referred to as "102"). For ease of description, each electric machine 100 of FIG. 2 is described below as being electrically coupled to, controlled by and/or otherwise associated with a single, dedicated one of the EM controllers 102. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 100A, 100B of FIG. 2 includes an electric machine rotor 104A, 104B (generally referred to as "104"), an electric machine stator 106A, 106B (generally referred to as "106") and an electric machine housing 108A, 108B (generally referred to as "108"); e.g., a case. The machine rotor 104 is rotatable about a centerline axis 109A, 109B (generally referred to as "109") of the respective electric machine 100 and its machine rotor 104. The machine stator 106 of FIG. 2 is radially outboard of and circumscribes the machine rotor 104. With this arrangement, each electric machine 100 is configured as a radial flux electric machine. The electric machines 100 of the present disclosure, however, are not limited to such an exemplary rotor-stator configuration nor to radial flux arrangements. The machine rotor 104, for example, may alternatively be radially outboard of and circumscribe the machine stator 106. In another example, the machine rotor 104 may be axially next to the machine stator 106 configuring the respective electric machine 100 as an axial flux electric machine. Referring again to FIG. 2, the machine rotor 104 and the machine stator 106 are at least partially or completely housed within an interior of the machine housing 108.

Each electric machine 100A, 100B may be operatively coupled to a respective one of the engine rotating structures 60A, 60B (generally referred to as "60"). Each machine rotor 104A, 104B of FIG. 2, for example, is mechanically coupled to and rotatable with the respective engine rotating structure 60A, 60B through a drivetrain 110A, 110B (generally referred to as "110"). This drivetrain 110 may be configured as or otherwise include a shaft, a tower shaft assembly, an accessory gearbox, an angle gearbox, and/or the like. For ease of description, each machine rotor 104 of FIG. 2 is described below as being coupled to and rotatable with a unique one of the engine rotating structures 60 of the turbine engine 24. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system. In addition, while the electric machines 100 are described above as being coupled to the engine rotating structures 60, it is contemplated the machine rotor 104 of one or more of the electric machines 100 may alternatively be operatively coupled to another rotating device through the drivetrain 110 such as, but not limited to, a pump rotor, an auxiliary compressor rotor, an actuator rotor, or the like.

Each electric machine 100 of FIG. 2 may be configurable as an electric motor and/or an electric generator; e.g., an electric motor-generator. For example, during a motor mode of operation, a respective one of the electric machines 100 may operate as the electric motor to convert electricity received from the aircraft electrical system 98 into mechanical power. The machine stator 106, for example, may generate an electromagnetic field with the machine rotor 104 using a current of electricity received from the aircraft electrical system 98 through the respective EM controller 102. This electromagnetic field may drive rotation of the machine rotor 104. The machine rotor 104, in turn, may provide mechanical power to and drive rotation of the respective engine rotating structure 60 through the respective drivetrain 110. This mechanical power may be provided to boost power or completely power the rotation of the respective engine rotating structure 60. By contrast, during a generator mode of operation, the respective electric machine 100 may operate as the electric generator to convert mechanical power received from the respective engine rotating structure 60 into electricity. Rotation of the machine rotor 104, for example, may be rotationally driven by rotation of the respective engine rotating structure 60 through the respective drivetrain 110. The rotation of the machine rotor 104 may generate an electromagnetic field with the machine stator 106, and the machine stator 106 may convert energy from the electromagnetic field into electricity. The respective electric machine 100 may then provide a current of electricity to the aircraft electrical system 98 through the respective EM controller 102 for storage and/or further use. The electric machines 100 of the present disclosure, however, are not limited to such exemplary operation. For example, one, some or all of the electric machines 100 may alternatively each be configured as a dedicated electric generator; e.g., without the electric motor functionality. In another example, one, some or all of the electric machines 100 may alternatively each be configured as a dedicated electric motor; e.g., without the electric generator functionality.

Each EM controller 102A, 102B includes a controller housing 112A, 112B (generally referred to as "112") and internal controller circuitry 114A, 114B (generally referred to as "114"). The controller housing 112 may be configured as an enclosed case (e.g., a closed or sealed container) for the respective controller circuitry 114. The controller circuitry 114 is disposed within an interior of the controller housing 112; e.g., an internal chamber or other volume(s) within and enclosed by the controller housing 112. The controller circuitry 114 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 102A, 102B is electrically coupled to a respective one of the electric machines 100A, 100B through one or more electric cables 116A, 116B (generally referred to as "116"); e.g., high voltage electric cables, power feeder cables, etc. More particularly, the controller circuitry 114 of each EM controller 102 is electrically coupled to the respective electric machine 100 and its machine stator 106 through the respective electric cables 116. Similarly, each EM controller 102A, 102B is electrically coupled to an electrical distribution bus 118 of the aircraft electrical system 98 through one or more electric cables 120A, 120B (generally referred to as "120"); e.g., high voltage electric cables, power feeder cables, etc. More particularly, the controller circuitry 114 of each EM controller 102 is electrically coupled to the aircraft electrical system 98 and its electrical distribution bus 118 through the respective electric cables 120.

Each EM controller 102 and its controller circuitry 114 are configured to control operation of a respective one of the electric machines 100. For example, when operating as the electric motor, the respective EM controller 102 and its controller circuitry 114 are configured to regulate a flow of electricity from the aircraft electrical system 98 to the respective electric machine 100. This electricity flow regulation may include: (a) turning-on the flow of electricity from the aircraft electrical system 98 to the respective electric machine 100 (e.g., electrically coupling the respective electric machine 100 to the aircraft electrical system 98); (b) turning-off the flow of electricity from the aircraft electrical system 98 to the respective electric machine 100 (e.g., electrically decoupling the respective electric machine 100 from the aircraft electrical system 98); (c) moderating the flow of electricity from the aircraft electrical system 98 to the respective electric machine 100. Here, the respective EM controller 102 operates as a motor controller. In another example, when operating as the electric generator, the respective EM controller 102 and its controller circuitry 114 are configured to regulate a flow of electricity from the respective electric machine 100 to the aircraft electrical system 98. This electricity flow regulation may include: (a) turning-on the flow of electricity from the respective electric machine 100 to the aircraft electrical system 98 (e.g., electrically coupling the respective electric machine 100 to the aircraft electrical system 98); (b) turning-off the flow of electricity from the respective electric machine 100 to the aircraft electrical system 98 (e.g., electrically decoupling the respective electric machine 100 from the aircraft electrical system 98); (c) moderating the flow of electricity from the respective electric machine 100 to the aircraft electrical system 98. Here, the respective EM controller 102 operates as a generator controller.

The electric accessory system 96 includes one or more electric devices 122. The electric devices 122 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 122 of FIG. 2 may be configured as part of one or more sub-systems for the aircraft propulsion system 22 and its turbine engine 24. Examples of these sub-systems include, but are not limited to: a fuel system for delivering the fuel to the fuel injectors (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 122 is electrically coupled to the electrical distribution bus 118 of the aircraft electrical system 98 through one or more electric cables 124 (collectively schematically shown); e.g., high voltage electric cables, low voltage electric cables, power feeder cables, etc. Each electric device 122 may thereby receive a current of electricity from the aircraft electrical system 98 to power operation thereof.

The aircraft electrical system 98 includes the electrical distribution bus 118. This aircraft electrical system 98 may also include a power source 126 and/or a power storage 128. The electrical distribution bus 118 is electrically coupled to each of the electric machines 100 through their respective EM controllers 102. The electrical distribution bus 118 is electrically coupled to each of the electric devices 122. The electrical distribution bus 118 is also electrically coupled to the power source 126 and the power storage 128, schematically shown via 130 and 132 respectively. With this arrangement, the electrical distribution bus 118 provides an intermediate connection between the various electrical aircraft propulsion system members 100A (via 102A), 100B (via 102B), 122, 126 and/or 128. The power source 126 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 128 is configured to receive electricity from the electrical distribution bus 118 for storage. The power storage 128 is also configured to provide the stored electricity to the electrical distribution bus 118. The power storage 128, for example, may be configured as or otherwise include one or more electricity storage devices; e.g., batteries, super capacitors, etc. With the foregoing aircraft electrical system arrangement, the electrical current provided to one, some or all of the electric devices 122 may be received, through the electrical distribution bus 118, from any one, some or all of the electrical aircraft propulsion system members 100A, 100B, 126 and/or 128. It is also contemplated the electrical current provided to one of the electric machines 100 may be received from another one of the electric machines 100 through the aircraft electrical system 98 and its electrical distribution bus 118.

Referring to FIG. 3, the working fluid system 36 is configured to cool, lubricate and/or otherwise service at least (or only) one or more of the electric machines 100. The working fluid system 36 of FIG. 3, for example, includes an air cooling circuit 134 configured to air cool at least (or only) one or more of the electric machines 100. The working fluid system 36 may also include a working fluid circuit 136 configured to liquid cool at least (or only) the one or more electric machines 100 cooled by the air cooling circuit 134. The working fluid system 136 may also or alternatively be configured to lubricate at least (or only) the one or more electric machines 100 cooled by the air cooling circuit 134. The working fluid system 136 of FIG. 3 is thereby configured as a liquid cooling and/or lubrication circuit for the electric machines 100.

The air cooling circuit 134 of FIG. 3 includes an air circuit path 138, an air circuit flow regulator 140 and one or more air circuit cooling boots 142A and 142B (generally referred to as "142"). Within the air cooling circuit 134, the air circuit components 140 and 142 are arranged inline along the air circuit path 138. The air circuit path 138 of FIG. 3, for example, includes a supply leg 144 and one or more (e.g., parallel) boot legs 146A and 146B (generally referred to as "146"). The supply leg 144 extends longitudinally from an inlet 148 into the air cooling circuit 134 and its air circuit path 138 to an inlet into the flow regulator 140. The first boot leg 146A extends longitudinally from a first outlet from the flow regulator 140 to an inlet 150A into the first cooling boot 142A. The second boot leg 146B extends longitudinally from a second outlet from the flow regulator 140 to an inlet 150B into the second cooling boot 142B. Of course, it is contemplated the air circuit path 138 may (or may not) also extend through and/or otherwise be fluidly coupled to various additional components (not shown) such as filter(s), sensor(s), heat exchanger(s), additional component(s), valve(s), pump(s), etc. The present disclosure therefore is not limited to the exemplary air cooling circuit arrangement shown in FIG. 3.

The flow regulator 140 is configured to regulate a flow of air through the air cooling circuit 134 and its air circuit path 138 from the air circuit inlet 148 to one or more of the downstream cooling boots 142. The flow regulator 140, for example, may be configured as a valve (e.g., a multi-way valve such as a three-way valve), a valve system or a flow diverter. During one mode of operation, the flow regulator 140 may direct all of the air received from the supply leg 144 into the first boot leg 146A for provision to the first cooling boot 142A. In another mode of operation, the flow regulator 140 may direct all of the air received from the supply leg 144 into the second boot leg 146B for provision to the second cooling boot 142B. In another mode of operation, the flow regulator 140 may direct the air received from the supply leg 144 into both (a) the first boot leg 146A for provision to the first cooling boot 142A and (b) the second boot leg 146B for provision to the second cooling boot 142B. During this mode of operation, the flow regulator 140 may direct uniform (e.g., equal) flows of the air into the first boot leg 146A and the second boot leg 146B. Alternatively, the flow regulator 140 may direct more of the air flow into the first boot leg 146A than the second boot leg 146B. Still alternatively, the flow regulator 140 may direct more of the air flow into the second boot leg 146B than the first boot leg 146A. In still another mode of operation, the flow regulator 140 may close (or otherwise divert the air flow received from the supply leg 144) such that neither of the boot legs 146 receives the air.

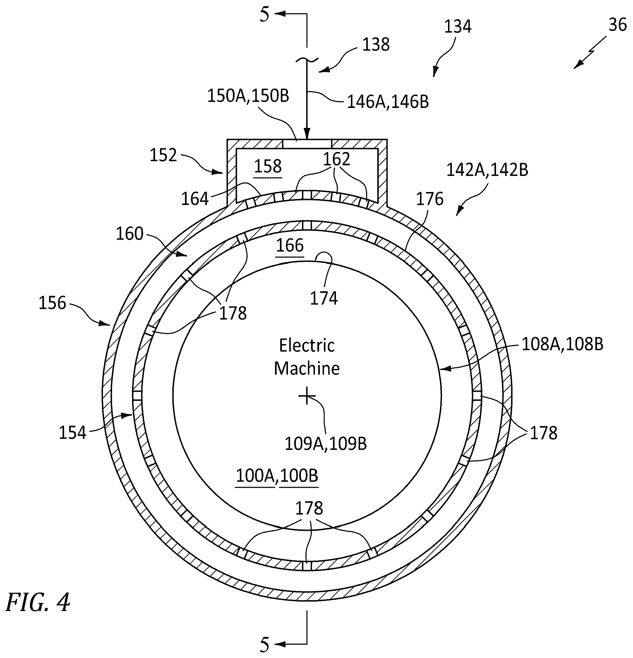

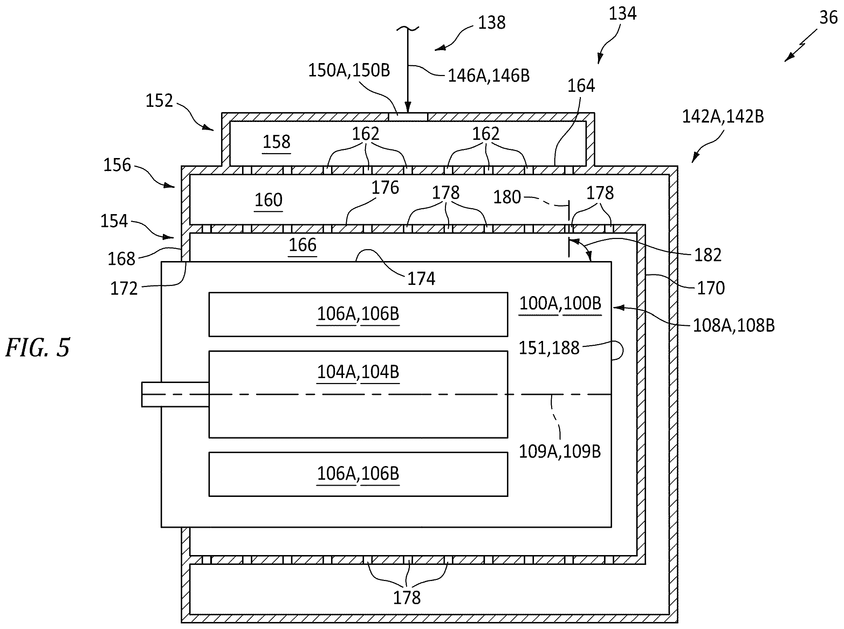

Referring to FIGS. 4 and 5, each cooling boot 142 is arranged with a respective one of the electric machines 100. The cooling boot 142 of FIGS. 4 and 5, for example, is disposed next to and may surround the respective electric machine 100. Referring to FIG. 4, the cooling boot 142 may be disposed radially outboard of and extend circumferentially about (e.g., completely around) the respective electric machine 100 and its electric machine (EM) axis 109. Referring to FIG. 5, the cooling boot 142 may be disposed axially adjacent an axial end 151 of the respective electric machine 100 along the EM axis 109. This cooling boot 142 of FIGS. 4 and 5 may also be mounted to the respective electric machine 100. Alternatively, the cooling boot 142 may be mounted to another stationary component of the aircraft propulsion system 22 such as, but not limited to, the inner case 68 of FIG. 1 or the inner nacelle structure 70 of FIG. 1. The cooling boot 142 of FIGS. 4 and 5 includes an air reservoir 152, a boot curtain 154 and an air manifold 156.

The air reservoir 152 fluidly couples the respective boot leg 146 to the air manifold 156. An internal reservoir volume 158 (e.g., an air cavity) of the air reservoir 152 of FIG. 3, for example, is fluidly coupled to the respective boot leg 146 through the respective boot inlet 150A, 150B (generally referred to as "150"). The reservoir volume 158 is further fluidly coupled to an internal manifold volume 160 (e.g., an air cavity) of the air manifold 156 through one or more feed apertures 162. Each of these feed apertures 162 projects radially inward (e.g., in a direction towards the respective electric machine 100 and its EM axis 109) through a reservoir wall 164 from the reservoir volume 158 to the manifold volume 160. The air reservoir 152 and its reservoir volume 158 of FIG. 4 extend partially circumferentially about the cooling boot elements 154 and 156, for example, between twenty degrees (20°) and ninety degrees (90°). However, in other embodiments, it is contemplated the air reservoir 152 and its reservoir volume 158 may alternatively extend circumferentially about the cooling boot elements 154 and 156 more than ninety degrees (90°). For example, the air reservoir 152 and its reservoir volume 158 may alternatively circumscribe the cooling boot elements 154 and 156. Referring to FIG. 5, the air reservoir 152 and its reservoir volume 158 also extend axially along the cooling boot elements 154 and 156.

Referring to FIGS. 4 and 5, the boot curtain 154 is configured to form one or more peripheral boundaries of an air plenum 166 between the air manifold 156 and the respective electric machine 100 and its machine housing 108. The boot curtain 154 of FIG. 5, for example, includes a curtain lip 168 and a curtain endwall 170.

The curtain lip 168 is disposed to a first axial side of the respective cooling boot 142 and its air manifold 156. This curtain lip 168 projects radially inward from the air manifold 156 to an inner distal edge 172 of the boot curtain 154 and its curtain lip 168. At this distal edge 172, the boot curtain 154 and its curtain lip 168 may contact or otherwise engage an exterior electric machine (EM) surface 174 of the respective electric machine 100 and its machine housing 108. Alternatively, it is contemplated the boot curtain 154 and its curtain lip 168 may be slightly spaced form the EM surface 174.

The curtain endwall 170 is disposed to a second axial side of the respective cooling boot 142 and its air manifold 156. The curtain endwall 170 is spaced axially out from the axial end 151 of the respective electric machine 100 along the EM axis 109. The curtain endwall 170 extends diametrically across an inner bore of the respective cooling boot 142. More particularly, the curtain endwall 170 extends radially from the EM axis 109 to the air manifold 156 to close off the inner bore of the respective cooling boot 142.

The air plenum 166 extends within the respective cooling boot 142 and its boot curtain 154 circumferentially about (e.g., completely around) the respective electric machine 100 and its EM axis 109. The air plenum 166 extends within the respective cooling boot 142 and its boot curtain 154 axially along the respective electric machine 100 and its EM axis 109 from the curtain lip 168 to the curtain endwall 170. The air plenum 166 projects radially outward into the respective cooling boot 142 and its boot curtain 154 from the distal edge 172 to a manifold wall 176 of the air manifold 156; e.g., a shared wall with the boot curtain 154. The air manifold 156 and its manifold wall 176 may thereby form a radial outer peripheral boundary of the air plenum 166. The respective electric machine 100 and its members 108 and 174 may form a radial inner peripheral boundary of the air plenum 166. In addition, the curtain endwall 170 may form an interior axial peripheral boundary of the air plenum 166. The respective electric machine 100 and its members 108 and 151 may form an exterior axial peripheral boundary of the air plenum 166.

The air manifold 156 fluidly couples the air reservoir 152 to the air plenum 166. The manifold volume 160 of FIG. 5, for example, is fluidly coupled to the reservoir volume 158 through the feed passages as described above; see also FIG. 4. The manifold volume 160 is further fluidly coupled to the air plenum 166 through one or more air outlets 178; e.g., cooling air apertures such as impingement apertures. These air outlets 178 may be arranged in an array (e.g., a showerhead type array) along the air plenum 166; e.g., circumferentially about and/or axially along the air plenum 166. Each of the air outlets 178 projects along a centerline 180 of the respective air outlet 178 through the manifold wall 176 from the manifold volume 160 to the air plenum 166. Each outlet centerline 180 is angularly offset from the EM surface 174 by an offset angle 182. This offset angle 182 may be a right angle or close to a right angle. The offset angle 182, for example, may be between seventy degrees (70°) and ninety degrees (90°), inclusive. In other embodiments, however, it is contemplated the offset angle 182 associated with one or more of the air outlets 178 may alternatively be a non-zero acute angle equal to or less than seventy degrees (70°).

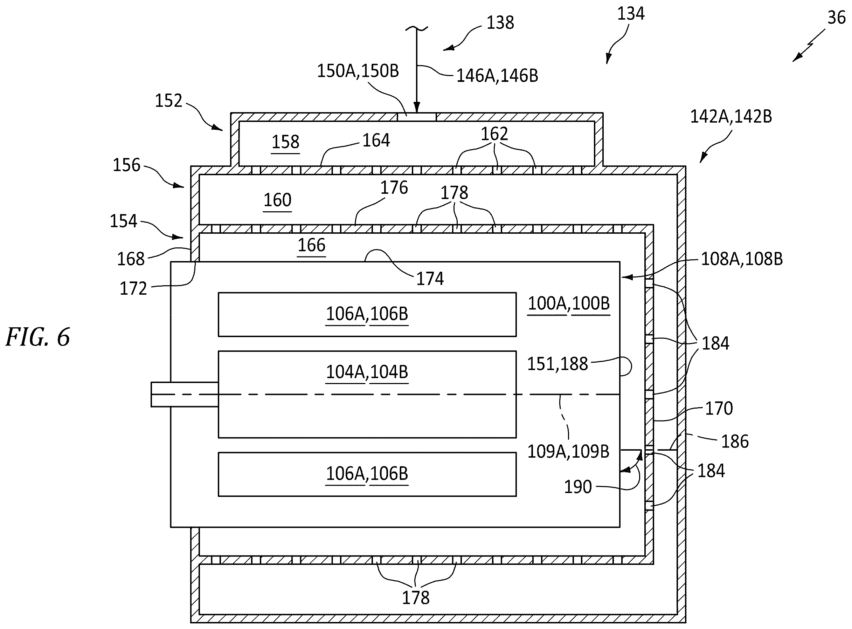

In some embodiments, referring to FIG. 5, the curtain endwall 170 may be configured as a non-perforated wall of the boot curtain 154. In other embodiments, referring to FIG. 6, the curtain endwall 170 may alternatively include one or more additional air outlets 184. Each of these air outlets 184 projects along a centerline 186 of the respective air outlet 184 through the curtain endwall 170 from the manifold volume 160 to the air plenum 166. Each outlet centerline 186 is angularly offset from an axial end surface 188 of the respective electric machine 100 and its machine housing 108 by an offset angle 190. This offset angle 190 may be a right angle or close to a right angle. The offset angle 190, for example, may be between seventy degrees (70°) and ninety degrees (90°), inclusive. In other embodiments, however, it is contemplated the offset angle 190 associated with one or more of the air outlets 184 may alternatively be a non-zero acute angle equal to or less than seventy degrees (70°).

During operation of the air cooling circuit 134 of FIG. 3, the air circuit inlet 148 receives a flow of the air from an air source 192. The air circuit inlet 148 directs the received airflow into the air circuit path 138 and its supply leg 144. The flow regulator 140 selectively directs the air into one or more of the boot legs 146 to provide the air to the respective cooling boots 142. At each cooling boot 142, referring to FIG. 5, the air flows into the reservoir volume 158 from the respective upstream boot leg 146, where the air within the air reservoir 152 and the air within the respective upstream boot leg 146 may have a common (the same) or similar pressure. The feed apertures 162 provide a metered flow of the air into the manifold volume 160 from the air reservoir 152. The air outlets 178 subsequently direct the air into the air plenum 166 from the air manifold 156. Each air outlet 178, for example, may direct a flow (e.g., a stream, a jet, etc.) of the air along a trajectory across the air plenum 166 to impinge against the EM surface 174, where the trajectory may be parallel to (e.g., an extension of) the respective outlet centerline 180. Each cooling boot 142 may thereby facilitate impingement cooling of the respective electric machine 100. Moreover, as the air flows along the EM surface 174 and/or the end surface 188 within the air plenum 166 (e.g., following the impingement), this airflow may convectively cool the respective electric machine 100 before being exhausted from the respective cooling boot 142. Each cooling boot 142 may thereby further facilitate convective cooling of the respective electric machine 100.

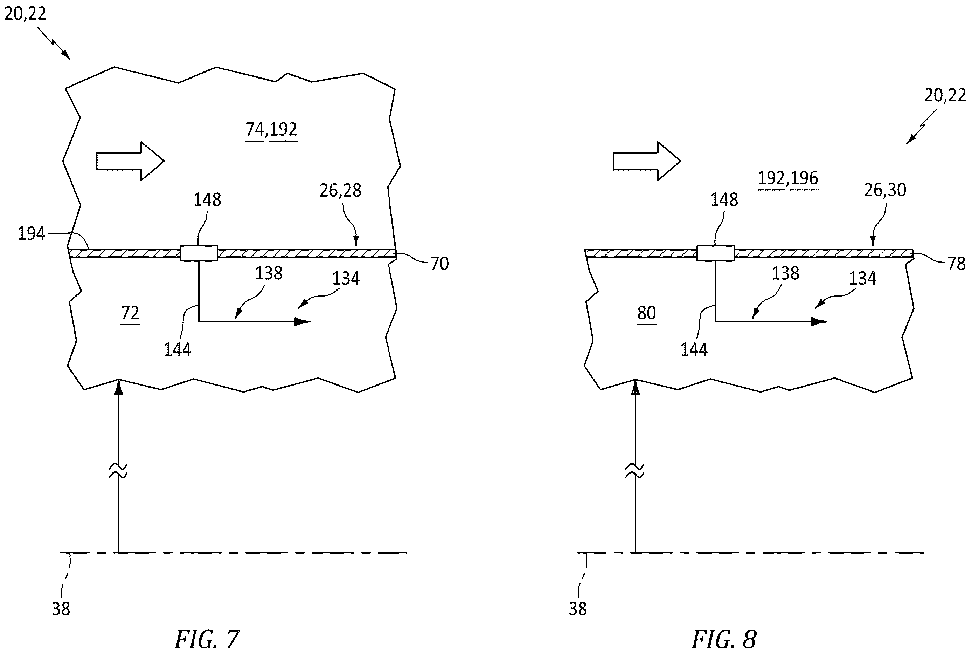

In some embodiments, referring to FIG. 7, the air source 192 may be internal to (e.g., inside of) the aircraft propulsion system 22. The air source 192 of FIG. 7, for example, is configured as a flowpath within the aircraft propulsion system 22 such as, but not limited to, the bypass flowpath 74 (or the core flowpath 84 of FIG. 1). In such embodiments, the air circuit inlet 148 may be configured as a scoop (or scoops) or a bleed port (or bleed ports) disposed along a flow surface 194 of the inner housing structure 28 and its inner nacelle structure 70. Examples of the scoop include, but are not limited to, a NACA scoop and a ram-air scoop. In other embodiments, referring to FIG. 8, the air source 192 may be external to (e.g., outside of) the aircraft propulsion system 22. The air source 192 of FIG. 8, for example, is configured as an environment 196 external to the aircraft propulsion system 22 (see also FIG. 1) and, more generally, external to the aircraft. The present disclosure, however, is not limited to the foregoing exemplary air sources.

Referring to FIG. 3, the working fluid circuit 136 includes a fluid circuit path 198, a fluid circuit heat exchanger 200 (HX), a fluid circuit pump 202 and a fluid circuit reservoir 204. Within this working fluid circuit 136, the fluid circuit components 200, 204 and 202 are arranged inline along the fluid circuit path 198. The fluid circuit path 198 of FIG. 3, for example, extends serially through the fluid circuit components 200, 204 and 202 in a closed loop. The fluid circuit path 198 of FIG. 3 may also be fluidly coupled to and extend in series or in parallel through the respective electric machines 100. Note, while the electric machines 100 are shown as being upstream of the fluid circuit heat exchanger 200 along the fluid circuit path 198, it is contemplated one or more or all of these electric machines 100 may alternatively be arranged downstream of the fluid circuit heat exchanger 200 along the fluid circuit path 198. In addition or alternatively, while the fluid circuit reservoir 204 is shown as being downstream of the fluid circuit heat exchanger 200 along the fluid circuit path 198, it is contemplated the fluid circuit reservoir 204 may alternatively be upstream of the fluid circuit heat exchanger 200 along the fluid circuit path 198. Moreover, it is contemplated the working fluid circuit 136 may (or may not) include various additional components (not shown) arranged along the fluid circuit path 198 such as filter(s), sensor(s), additional heat exchanger(s), additional component(s), valve(s), pump(s), etc. The present disclosure therefore is not limited to the exemplary working fluid circuit arrangement shown in FIG. 3.

The fluid circuit heat exchanger 200 includes one or more internal intra-circuit heat exchange (HX) passages 206 and one or more internal extra-circuit heat exchange (HX) passages 208. Each of these HX passages 206, 208 may be partially or completely formed by the fluid circuit heat exchanger 200. Each of the HX passages 206, 208 also extends within and/or through the fluid circuit heat exchanger 200. The intra-circuit HX passages 206 may form a section of or may otherwise be fluidly coupled inline with the fluid circuit path 198. The extra-circuit HX passages 208 may form a section of or may otherwise be fluidly coupled inline with a path 210 of a second (e.g., liquid and/or gas) working fluid circuit for the aircraft propulsion system 22. The intra-circuit HX passages 206 are thereby fluidly discrete from the extra-circuit HX passages 208 within the fluid circuit heat exchanger 200. Within the fluid circuit heat exchanger 200, the intra-circuit HX passages 206 and the extra-circuit HX passages 208 may be arranged to configure the fluid circuit heat exchanger 200 as a crossflow heat exchanger, a counterflow heat exchanger, a parallel flow heat exchanger, or a hybrid heat exchanger with a combination crossflow, counterflow and/or parallel flow arrangement.

The fluid circuit pump 202 is configured to direct and/or regulate a flow of a liquid working fluid (e.g., lubricant and/or a heat exchange fluid) through the fluid circuit path 198 from an outlet from (e.g., a supply of) the fluid circuit reservoir 204, through the electric machines 100 and the fluid circuit heat exchanger 200, to an inlet into (e.g., a return of) the fluid circuit reservoir 204.

The fluid circuit reservoir 204 is configured to contain a quantity of the working fluid before, during and/or after working fluid circuit operation. The fluid circuit reservoir 204, for example, may be configured as or otherwise include a tank, a cylinder, a pressure vessel, a bladder or any other type of (e.g., liquid) storage container.

During operation of the working fluid circuit 136 of FIG. 3, the fluid circuit pump 202 directs (e.g., pumps) relatively cool working fluid out of the fluid circuit reservoir 204, through the fluid circuit path 198, into the electric machines 100. As the working fluid flows through the electric machines 100, heat energy generated by the electric machines 100 may be transferred into the working fluid. The heat energy transfer may thereby dissipate the heat energy in (e.g., cool) the electric machines 100 while also heating the working fluid. The now heated working fluid is directed away from the electric machines 100, through the fluid circuit path 198, to the fluid circuit heat exchanger 200. Within the fluid circuit heat exchanger 200, at least some or all of the heat energy previously transferred into the working fluid from the electric machines 100 may be transferred out of the working fluid into a second working fluid flowing through the second circuit path 210 thereby cooling the working fluid. The now cooled working fluid is directed from the fluid circuit heat exchanger 200, through the fluid circuit path 198, back into the fluid circuit reservoir 204 of subsequent recirculation.

During one mode of operation, the air cooling circuit 134 and the working fluid circuit 136 of FIG. 3 may be operated concurrently. For example, the air cooling circuit 134 may be utilized to provide supplemental cooling when a cooling capability of the working fluid circuit 136 is diminished; e.g., when the turbine engine 24 is at idle and/or during aircraft descent. In another mode of operation, the air cooling circuit 134 may be operated without operating the working fluid circuit 136. The working fluid circuit 136, for example, may be non-operational where the fluid circuit pump 202 is turned off. In still another mode of operation, the working fluid circuit 136 may be operated without operating the air cooling circuit 134. The air cooling circuit 134, for example, may be non-operational where the flow regulator 140 is closed or otherwise diverts the air away from the downstream boot legs 146.

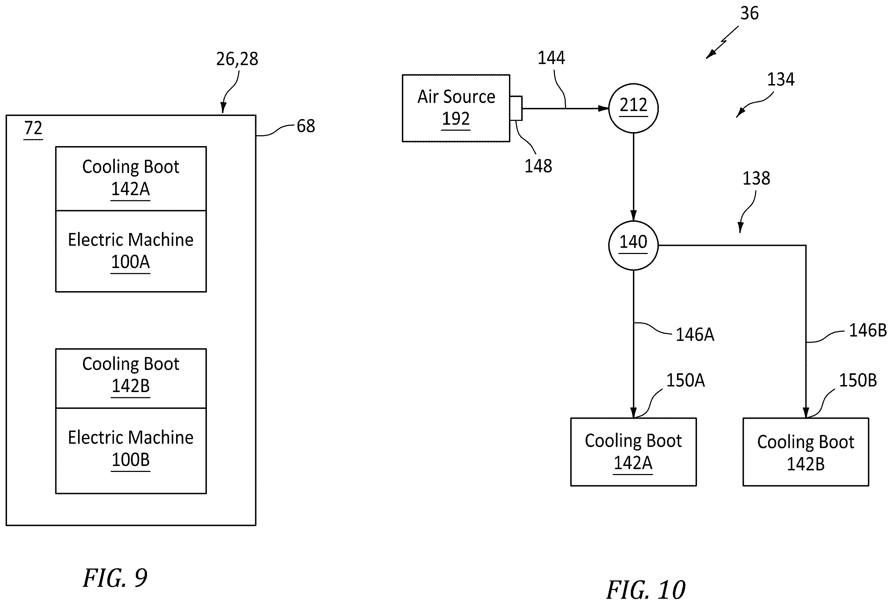

In some embodiments, referring to FIG. 9, one or more of the electric machines 100 serviced by the cooling circuits 134 and 136 of FIG. 3 may be arranged with the inner housing structure 28 to reduce coupling lengths with the engine core 50 (see FIG. 1). The electric machines 100 of FIG. 9, for example, may be arranged with the inner housing compartment 72. The electric machines 100, more particularly, may be directly or indirectly mounted to the inner case 68; e.g., through an accessory gearbox. The present disclosure, however, is not limited to such an exemplary arrangement. For example, in other embodiments, it is contemplated one or more of the electric machines 100 and, thus, the respective cooling boots 142 may alternatively be arranged with the outer housing structure 30 (see FIG. 1); e.g., within the outer housing compartment 80.

In some embodiments, referring to FIG. 10, the air cooling circuit 134 may also include an electric compressor 212; e.g., a boost compressor. This electric compressor 212 may be arranged inline along the air cooling circuit 134 between the air circuit inlet 148 and the cooling boots 142. In some embodiments, the electric compressor 212 may be provided in addition to the flow regulator 140. In other embodiments, the electric compressor 212 may be provided as a replacement for the flow regulator 140 where, for example, the electric compressor 212 is used as a flow regulator. With this arrangement, the electric compressor 212 may boost a pressure of the incoming air directed into the air cooling circuit 134 from the air circuit inlet 148 as needed. This may be particularly useful where the aircraft propulsion system 22 is configured as an open rotor aircraft propulsion system as described below.

The aircraft propulsion system 22 of FIG. 1 is described above as a ducted propulsor propulsion system; e.g., the turbofan propulsion system. However, as described above, the present disclosure is not limited to such an exemplary aircraft propulsion system. For example, referring to FIG. 11, the outer housing structure 30 (see FIG. 1) may be omitted from the propulsion system housing 26 to open the propulsor rotor 52 up to the external environment 196. More particularly, the propulsor rotor 52 of FIG. 11 includes a plurality of open propulsor blades 214 arranged circumferentially about the propulsion system axis 38 in an array (e.g., a circular array), which array of propulsor blades may be unshrouded or alternatively shrouded by a tubular propulsor rotor shroud dedicated to the propulsor rotor 52 for example. Each of these propulsor blades 214 projects radially out from a base of the propulsor rotor 52, into the external environment 196, to a distal tip 216 of the respective propulsor blade 214. Each propulsor blade 214 is thereby configured as an un-ducted propulsor blade which is exposed to (e.g., disposed in) the surrounding external environment 196. With this arrangement, the propulsor rotor 52 is an open propulsor rotor (e.g., an un-ducted propulsor rotor) and the aircraft propulsion system 22 is configured as an open rotor propulsion system.

The aircraft propulsion system 22 of FIG. 11 is configured with an open guide vane structure 32'. This guide vane structure 32' of FIG. 11 includes a plurality of open exit guide vanes 218; e.g., airfoils. The guide vanes 218 are arranged and may (or may not) be equispaced circumferentially about the propulsion system axis 38 in an array (e.g., a circular array), which array of guide vanes may be unshrouded or alternatively shrouded by a tubular guide vane shroud dedicated to the guide vane structure 32' for example. This guide vane structure 32' and its guide vanes 218 are arranged axially next to (e.g., adjacent) the propulsor rotor 52 and its propulsor blades 214. The guide vane structure 32' and its guide vanes 218 of FIG. 11, for example, are arranged downstream of the propulsor rotor 52 and its propulsor blades 214, without (e.g., any) other elements axially therebetween to obstruct, turn and/or otherwise influence the air propelled by the propulsor rotor 52 to the guide vane structure 32' for example. Each of the guide vanes 218 projects radially out from an exterior surface of the inner housing structure 28, into the external environment 196, to a distal tip 220 of the respective guide vane 218. Each guide vane 218 is thereby configured as an un-ducted guide vane which is exposed to (e.g., disposed in) the surrounding external environment 196. With the foregoing arrangement, the guide vane structure 32' and its guide vanes 218 are configured to condition (e.g., straighten out, de-swirl, etc.) an outer stream of air propelled by the propulsor rotor 52 within the external environment 196 that bypass the engine core 50. Of course, in other embodiments, the guide vane structure 32' may be omitted where, for example, the aircraft propulsion system 22 is alternatively configured as a counter-rotating open rotor (CROR) aircraft propulsion system, etc.

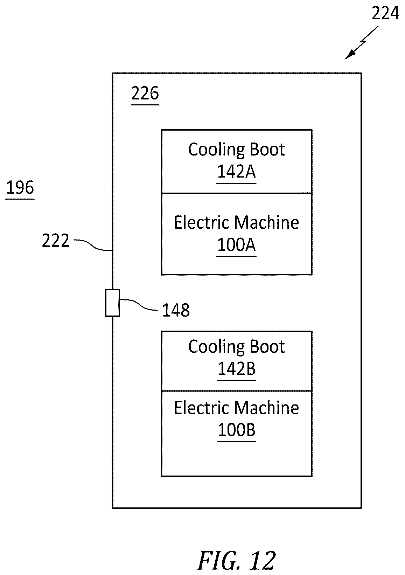

Where the air source 192 of FIG. 3 is the external environment 196 of FIG. 11, the air circuit inlet 148 may be configured as a scoop disposed along an exterior surface of the housing structure 28 and its nacelle structure 70. Alternatively, referring to FIG 12, the air circuit inlet 148 may be disposed along an exterior surface 222 of a structure 224 of the aircraft remote from the relatively hot turbine engine 24 and its engine core 50 (see FIGS. 1 and 11). Examples of the aircraft structure 224 include, but are not limited to; a pylon structure mounting the aircraft propulsion system 22 (see FIGS. 1 or 11) to a wing or a fuselage of the aircraft; the wing of the aircraft; or the fuselage of the aircraft. Moreover, one or more of the electric machines 100 and the associated cooling boots 142 may be arranged with the aircraft structure 224. The electric machines 100 and the associated cooling boots 142 of FIG. 12, for example, are arranged within an internal compartment 226 of the aircraft structure 224. The present disclosure, however, is not limited to such exemplary arrangements.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus (20) for an aircraft, comprising:
an electric machine (100A; 100B) including an electric machine rotor (104A; 104B) and an electric machine stator (106A; 106B), the electric machine (100A; 100B) configured to generate an electromagnetic field with the electric machine rotor (104A; 104B) and the electric machine stator (106A; 106B), and the electric machine rotor (104A; 104B) configured to rotate about an axis (109A; 109B); and
an air cooling circuit (134) comprising a cooling boot (142A; 142B), the air cooling circuit (134) configured to direct air from an air source (192) into the cooling boot (142A; 142B), the cooling boot (142A; 42B) forming an air plenum (166) with an exterior surface (174) of the electric machine (100A; 100B), the cooling boot (142A; 142B) comprising a plurality of air outlets (178), and the cooling boot (142A; 142B) configured to direct the air through the plurality of air outlets (178) and into the air plenum (166) to air cool the electric machine (100A; 100B).

2. The apparatus of claim 1, wherein the cooling boot (142A; 142B) is configured such that the air directed into the air plenum (166) impingement cools the exterior surface (174) of the electric machine (100A; 100B).

3. The apparatus of claim 1 or 2, wherein the cooling boot (142A; 142B) is configured such that the air directed into the air plenum (166) convectively cools the exterior surface (174) of the electric machine (100A; 100B).

4. The apparatus of any preceding claim, wherein:
at least a portion of the air plenum (166) is radially outboard of and extends circumferentially about the electric machine (100A; 100B); and
a first of the plurality of air outlets (178) projects radially inwards to the air plenum (166).

5. The apparatus of any preceding claim, wherein:
at least a portion of the air plenum (166) is axially next to the electric machine (100A; 100B); and
a first of the plurality of air outlets (178) projects axially to the air plenum (166).

6. The apparatus of any preceding claim, wherein:
the cooling boot (142A; 142B) further comprises a manifold (156) with a wall (176) and an air cavity (160);
the wall (176) is between and extends along the air cavity (160) and the air plenum (166);
and
each of the plurality of air outlets (178) extends through the wall (176) from the air cavity (160) to the air plenum (166).

7. The apparatus of any preceding claim, wherein a centerline (180) of a first of the plurality of air outlets (178) is angularly offset from the exterior surface (174) of the electric machine (100A: 100B) by an offset angle (182) between seventy degrees and ninety degrees.

8. The apparatus of any preceding claim, wherein:
the air cooling circuit (134) further comprises a flow regulator (140) arranged inline between the air source (192) and the cooling boot (142A; 142B); and/or
the air cooling circuit (134) further comprises a compressor (212) arranged inline between the air source (192) and the cooling boot (142; 142B).

9. The apparatus of any preceding claim, wherein:
the air source (192) is a flowpath (84) within a propulsion system (22) for the aircraft and the air cooling circuit (134) is configured to bleed the air from the flowpath (84); or
the air source (192) is an environment (196) external to the aircraft and the air cooling circuit (134) further comprises an air circuit inlet (148) that fluidly couples the air cooling circuit (134) to the environment (196).

10. The apparatus of any preceding claim, further comprising a working fluid circuit (136) configured to service the electric machine (100A; 100B) using a liquid working fluid.

11. The apparatus of any preceding claim, wherein the electric machine (100A; 100B) is configurable as an electric motor and/or as an electric generator.

12. The apparatus of any preceding claim, further comprising:
a turbine engine (24) including an or the flowpath (84), a compressor section (45), a combustor section (46) and a turbine section (47), the flowpath (84) extending through the compressor section (45), the combustor section (46) and the turbine section (47); and
the electric machine (100A; 100B) operatively coupled to the turbine engine (24).

13. The apparatus of any preceding claim, further comprising an aircraft propulsion system (22) comprising an open propulsor rotor (52) or a ducted propulsor rotor (52), wherein the aircraft propulsion system (22) is configured with the electric machine (100A; 100B) and the air cooling circuit (134).

14. An apparatus (20) for an aircraft, comprising:
a turbine engine (24) comprising a compressor section (45), a combustor section (46), a turbine section (47), a flowpath (84) and a rotating structure (60A; 60B), the flowpath (84) extending through the compressor section (45), the combustor section (46) and the turbine section (47) from an inlet (86) into the flowpath (84) to an exhaust (88) from the flowpath (84), the rotating structure (60A; 60B) comprising a bladed rotor (53; 54; 55; 56) in the compressor section (45) or the turbine section (47);
an electric machine (100A; 100B) comprising an electric machine rotor (104), the electric machine (100A; 100B) configurable as at least one of an electric motor or an electric generator, and the electric machine rotor (104) operatively coupled to the rotating structure (60; 60B); and
an air cooling circuit (134) configured to direct a plurality of jets of cooling air against an exterior surface (174) of the electric machine (100A; 100B) to impingement cool the electric machine (100A; 100B),
optionally wherein the apparatus (20) further comprises a working fluid circuit (136) configured to at least one of lubricate or further cool the electric machine (100A; 100B) with a liquid working fluid.

15. An apparatus (20) for an aircraft, comprising:
an open propulsor rotor (56);
a turbine engine (24) configured to drive rotation of the open propulsor rotor (52);
an electric machine (100A; 100B) operatively coupled to the turbine engine (24), the electric machine (100A; 100B) configurable as at least one of an electric motor or an electric generator; and
an air cooling circuit (134) configured to impingement cool the electric machine (100A; 100B) using air received from an air circuit inlet (148) into the air cooling circuit (134), the air circuit inlet (148) disposed along an exterior surface bordering an environment (196) external to the aircraft.
